# EUROPEAN PATENT SPECIFICATION

(11) **EP 1 144 149 B1**
(45) Date of publication and mention of the grant of the patent: **16.04.2003**
(21) Application number: 00900705.5
(22) Date of filing: 20.01.2000
(51) Int. Cl.: B23D 47/02, B27B 5/22, B27B 27/02, B28D 7/04

(54) **TILE CUTTER WITH GUIDE FENCE AND MITRE FENCE**
FLIESENSCHNEIDER MIT LÄNGSANSCHLAG UND WINKELANSCHLAG
APPAREIL DE COUPE DE CARREAUX DOTE D'UN GUIDE ET D'UN ONGLET

(30) Priority: 23.01.1999 GB 9901380
(43) Date of publication of application: 17.10.2001
(60) Divisional application: 02080134.6
(73) Proprietor: TURNER INTELLECTUAL PROPERTY LIMITED, Burton-on-Trent, Staffordshire DE14 1SD (GB)
(72) Inventor: HEPWORTH, Paul Steabben, Guildford, Surrey GU1 3TP (GB)
(74) Representative: Dealtry, Brian
(86) International application number: GB0000132
(87) International publication number: WO00043155

(56) References cited:
- EP-A- 0 014 869
- US-A- 1 826 056
- US-A- 2 342 700
- US-A- 4 846 036
- US-A- 5 293 802

## Description

This invention relates to cutting apparatus, particularly, though not exclusively, for cutting flat plates, such as ceramic tiles, and has as its object the provision of such apparatus in a convenient form.

An apparatus of this type is described and shown in our UK Patent Application No. GB2303820A. Such apparatus has a guide fence linearly slidably adjustable over a base on which a tile to be cut is received, in use.
The guide fence is provided with quick engagement and release means for ease of locking the guide means in a selected adjusted position and the release therefrom for subsequent adjustment movement over the base. At each end of the guide fence such means are in the form of a pivoted clamp which snap-fittedly engages with an upper part of the body of the cutting apparatus.

US 5,293,802 representing the closest prior art discloses a table saw having a circular saw table for supporting a circular saw for cutting a work, a miter table disposed adjacent to said circular saw table and having a miter fence thereon for guiding said work to said circular saw and a supplementary table cooperating with said two tables for supporting said work, said three tables being disposed so as to form a working table, wherein a pair of guide rails are disposed laterally on the front and rear sides of said working table, respectively, a lip fence being provided in the front and rear direction of said working table in order to determine a cutting length of said work, said lip fence comprising a main body and a front and a rear guide portions respectively provided at the front and the rear ends of said main body, said front guide portion being provided with a movable means for moving laterally slidably said lip fence along said guide rails and a fastening means for fastening said lip fence on said guide rails, said fastening means having a fastening handle which is so operated that, at a first stage, said front guide portion is pressed to be held on said front guide rail and that, at a second stage, said front guide portion is steadily fastened on said front guide rail and, at the same time, said rear guide portion is fastened on said rear guide rails through a connecting member accommodated in said main body of said lip fence for transmitting movement of said handle to said rear guide portion.

One aspect of the present invention relates to an improved form of guide fence of this type, with an alternative form of quick release and engagement means, and an embodiment of the present invention relates to the provision, with a guide fence in use of adjustable means for introducing a flat plate to a cutting means of the cutting apparatus at a selected angle. In one particular embodiment the adjustable means on the guide fence is an adjustable protractor provided with a right angled recess to accommodate a right-edged tile, which, by virtue of the adjustable nature of the protractor, can be moved onto cutting means at a selected angle to produce a desired cut through the tile. Accordingly a cut can be made, for example from corner to corner through the tile, or at right angles from one side to the opposite side thereof, or at any angle therebetween said two examples.

According to the invention there is provided a cutting apparatus as claimed in Claim 1.

The invention will now be described, by way of example, with reference to the accompanying drawings, in which:
Figure 1 is a schematic, top perspective view of a base of a cutting apparatus, with a guide fence of the invention shown thereon, with one end of the guide fence being shown in two alternative states;
Figure 2 is a fragmentary view of the opposite end of the guide fence, shown in alternative position from that of Figure 1;
Figure 3 is a schematic view similar to that of Figure 1, but showing another aspect of the invention, where adjustable protractor means are associated with a guide fence to alter the angle of cut through a tile resting on, and in a plane parallel to, the base of the cutting apparatus;
Figure 4 shows component parts of an alternative embodiment of the cutting apparatus of Figures 1 and 2, some of said component parts being shown inverted for the sake of clarity; and
Figures 5 to 7 respectively show consecutive stages in the operation of a locking lever with the cutting apparatus employing the component parts shown in Figure 4.

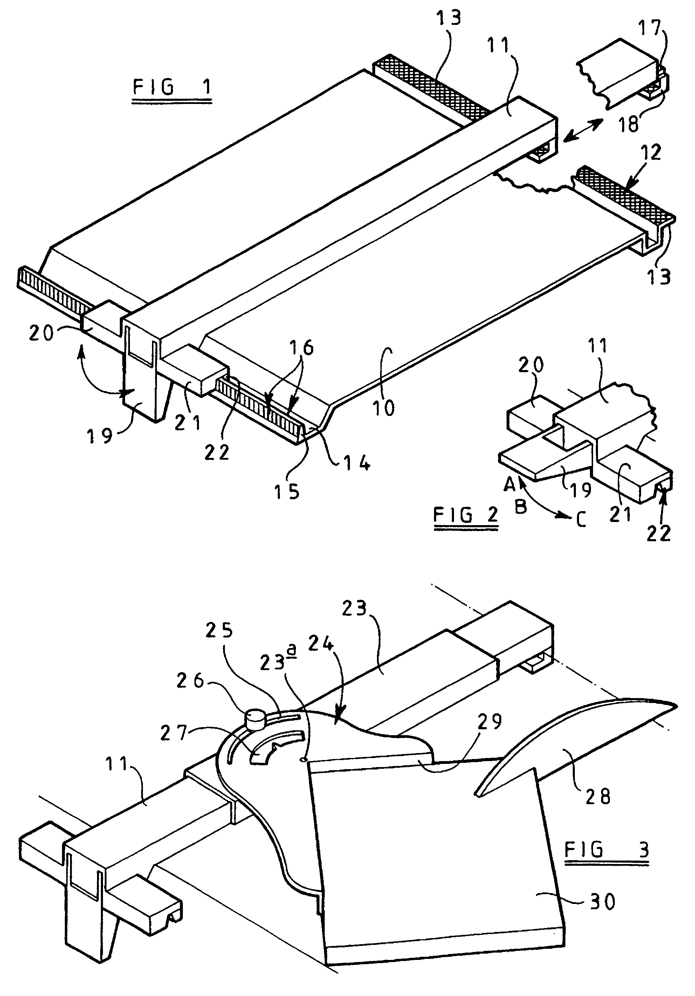

Figure 1 shows part of a cutting apparatus of a form similar to that described and shown in our above mentioned British Patent specification, although various components of the cutting apparatus are not shown. The cutting apparatus comprises a flat base 10 across which is adjustably slidable a generally rectangular, elongated guide fence 11. Respective opposite ends of the guide fence engage with opposite edge portions of the base. As shown in Figure 1, one edge portion is formed as an outwardly extending lip 12 in the same plane as the main part of the base, the upper and lower surfaces of this lip being formed with serrations or fine ribbing 13 for a purpose to be described. The opposite edge is formed with a channel 14 leading to an outer, upwardly extending rib or grip bar 15, which is provided with serrations or fine ribbing 16 on both its inner and outer surfaces. As shown in Figure 1, this grip bar 15 can taper upwardly.

Extending through the downwardly open guide fence 11 is a bar 17 which, at the one end of the guide fence at the lip 12, can extend out of the fence 11. The bar 17 at said end is formed with a downturned and then inturned part 18 in the form of a clamp or hook which, as will be described, is intended to engage with the lip 12 so that said lip is tightly fitted between the upper and lower surfaces of the hook, which are provided with serrations or fine ribbing. Alternatively the engagement could be between the inner surface of the inturned part and the underside of the fence 11. The fragmentary view of this end of the guide fence 11 shown in Figure 1 illustrates the position where the bar is extended slightly beyond the end of the fence, thereby allowing sliding adjustment of the fence over the base as will be described, whilst in the main drawing of the guide fence shown in Figure 1, the bar is shown schematically drawn inwardly to the guide fence so as to clamp onto the lip 12 to lock the guide fence in position at this side of the base.

The opposite end of the bar is formed with downwardly facing rack teeth with which a pinion of a locking lever 19 is engaged. Extending from respective opposite sides of the guide fence 11 at the grip bar 15 are a pair of wings 20, 21 respectively which each, at the underside thereof are formed with an inwardly extending recess in which the grip bar 15 is received to allow this end of the guide fence 11 to slide across the base. The 'base' or closed side of the recess engages the outer side of the grip bar 15, and can if necessary be formed with serrations or fine ribbing. The open side of the recess, at the opposite side of the grip bar, has a bar 22 disposed thereat, this bar being connected, for sliding movement in a plane parallel to the plane of the base 10, to the locking lever 19.

The slidable bar 22 is connected to the locking lever at a pivot pin which extends through the pinion, through spaced apart arms of the bar 22 at opposite sides of the pinion, and through spaced apart arms of the lever 19 at opposite sides of the arms of the bar 22.

The lever 19 has an inwardly directed block projection on its inner surface which can lock under the base at the grip bar, and opposite sides of the lever have cam surfaces which can engage lower surfaces of the wings. Movement of the lever to this position of engagement moves the pivot, and thus the bar 22, in a direction away from the main base surface and locks the lever in place when the engagement position is fully reached.

The arrangement is such that, as shown in Figure 2, with the locking lever 19 pivoted to its uppermost position as indicated by the letter A, the bar 22 is at its extreme spaced position in the recess relative to the 'base' surface of said recess, so that there is maximum spacing between said 'base' and said bar 22, this spacing being larger than the cross-sectional thickness of the grip bar 15 so that in this position this end of the guide fence is not locked to the grip bar 15 and can thus be slid freely therealong. The upwardly pivoted position A of the locking lever 19 also corresponds to the position shown in the fragmentary view in Figure 1 for the opposite end of the guide fence where the bar 17 has been moved slightly outwardly from the guide fence 11, so that this end of the guide fence is similarly free for said sliding movement, in this case sliding movement of the hook part relative to the lip 12.

Movement of the locking lever from position A to position B causes said pivot to move linearly as described, and thus move the clamp bar 22 slightly closer to the vertical 'base' surface of the recess, this movement being sufficient so as firmly to clamp the grip bar in said recess. Of course rather than the pivoting action moving the bar 22, there could possibly be some arrangement in which the bar remains stationary whilst the wings move relative to the bar. In another possible alternative, there could be movement of both of said components. However whichever arrangement is used, the gap in which the grip bar is received narrows so as to prevent sliding movement, with the grip bar being tightly clamped between said bar 22 and the wings. The fine ribbing or serrations on both sides of the grip bar and/or on the recess 'base' and bar 22, enhances the locking action. This clamping also simultaneously aligns the fence with the grip bar 15, thus correcting any slight deviation of the guide fence from its required alignment at right angles to said opposite sides of the base.

Completion of the locking action by pivoting the lever downwardly from position B to position C causes angular movement of the pinion sufficient to slide the bar 17 engaged therewith, so that the hook part 18 moves inwardly towards the guide fence 11 so as to clamp onto the lip 12 with the fine ribbing/serrations enhancing the clamping action. Moreover the lip 12 and/or the hook part 18 can be appropriately complimentarily tapered also to enhance said clamping upon sufficient inwards linear movement of the hook part. As described, a 'cam' lock is provided for the locking lever 19 when it is in position C. Alternatively some form of snap-fit or overcentre arrangement could be used alone, in combination together, or with the cam lock

When it is wished slidably to adjust the guide fence across the base, it is a simple and quick matter to pivot the locking lever 19 upwardly from position C, through position B to position A, thereby simultaneously releasing the clamping action both at the grip bar 15 and also at the lip 12. Not only does this allow sliding movement of the guide fence, but it also allows the guide fence to be removed vertically from the base if so desired.

Figure 3 shows a similar form of guide fence to that of Figures 1 and 2.

Figure 3 shows an inverted rectangular elongated channel member 23 which is slidably arranged as a close-fit on the top of the guide fence 11, with the sides of the channel of member 23 extending down the opposite sides of the guide fence 11. This slidable channel member 23 can be arranged to be captive on the guide fence 11, or alternatively can be slidable off the guide fence at one end thereof and can be arranged, alternatively, to be liftable off said guide fence. Pivotally adjustably mounted on the channel member 23, e.g. at 23a, is a protractor member 24, which has an arcuate slot 25 therein, through which the stem of a pivot bolt 26 passes, the stem being threadedly received in the member 23. The bolt serves to clamp the protractor member 24 in an angularly adjusted position, but also to allow adjustment of the protractor, when the bolt is released, by sliding the protractor relative to the bolt so that there is relative movement between the bolt and said slot. A scale 27 is provided for determining the adjustment, and angle of cut, as will be described.

The bolt is arranged at one longitudinal side of the upper part of the guide fence, and the protractor extends therefrom beyond the other longitudinal side of the guide fence so as to lie over the base. With the arrangement shown in Figure 3, the guide fence has been slidingly adjusted to a position near a cutting wheel 28 of the cutting apparatus so that a tile located at the protractor can be cut by the cutting wheel.

A forward part of the protractor at the end thereof remote from the pivot bolt 26, is formed with a right angled recess 29, the two adjoining sides of which are formed by downturned lips. The recess is arranged and sized to receive a conventional flat square tile 30 as shown, with two respective adjoining sides of the tile being received against said adjoining depending sides of the recess 29 in the protractor, the sides lying generally at 45° to the length of the guide fence 11 when the protractor is in its central adjusted position shown in Figure 3 with the pivot bolt at the centre of the slot 25. In this position, and with the guide fence adjusted accordingly along the base, it may be that upon sliding the channel 23 across the guide fence towards the cutting wheel 28, the tile received on the base will be cut from corner to corner, although Figure 3 is in this respect purely schematic in that it shows a somewhat different cut. Moreover the protractor would be arranged and shaped so as to be clear of any part of the cutting wheel as the channel member 23 is moved fully across the guide fence 11 to complete the cut through the tile.

It will be appreciated that by undoing the bolt 26 and pivoting the protractor member 24 thereabout, as well as adjusting the position of the guide fence on the base, the angle and position of the cut through the tile can be varied as required in a versatile manner. The scale 27 provides an indication of the angle of cut through the tile.

Clearly the form of the recess in the protractor can be varied as required, although the arrangement shown is believed suitable for normal square tiles, and possibly also for rectangular plates. For plates with a different configuration, an alternative suitable form of recess can be provided, possibly by way of an alternative replacement protractor member 24, alternative protractor members thus being supplied with the cutting apparatus. Clearly whatever the form of the recess, it is merely necessary that the tile which rests on the base is, in effect, maintained in the correct position for cutting at the angle required as the protractor, and thus the channel member, is slid across the guide fence. Some form of lock or other restraint could be provided if necessary to maintain the tile in position.

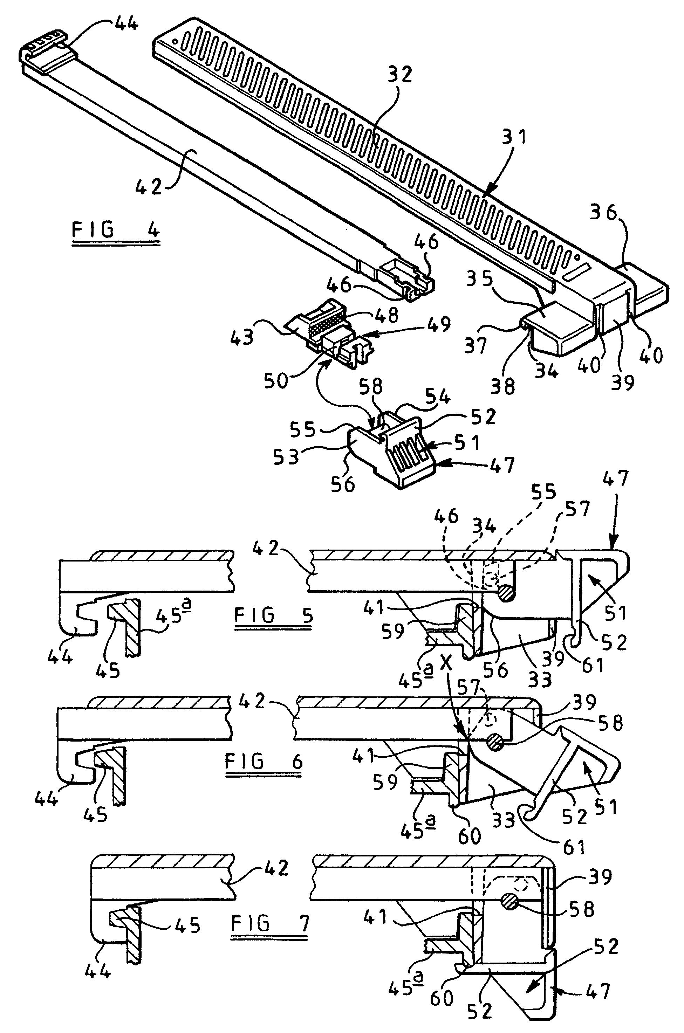

In an alternative embodiment of cutting apparatus according to the invention, the means for clamping the guide fence at opposite sides of the base are somewhat different from the embodiment described, and reference will now be made to this further embodiment in relation to Figures 4 to 7 of the accompanying drawings.

Figure 4 shows a guide fence 31 which has its main elongated portion 32 of channel-form, so that it is open downwardly. At its one end, in alignment with the elongate portion 32, the guide fence is formed with a downwardly open recess 33. The inner surface of the recess is closed by a wall 34 which extends at opposite sides of the recess to define respective surfaces of wings 35, 36. At the position of said wings, or along its whole length, the surface of the wall 34 facing outwardly in the direction of the portion 32 is ribbed. Each wing has its upper surface extended over said wall 34 in the direction of the portion 32, and then downturned to provide a lip 37 which is spaced from the wall 34 to define a channel 38.

The outwardly directed side of the recess 33 is substantially closed by a depending wall 39. However two slots 40 are defined at opposite vertical sides of the wall 39, thereby allowing access into the recess 33. The wall 34 at the top of the recess is formed with a rectangular opening 41, through which are received a sliding bar 42 and a clamping member 43, which are both shown in an inverted state in Figure 4. As with the first embodiment, the bar 42 has a hook 44 or the like at its one end to engage an outwardly directed lip 45 at an edge portion of the base 45a.

As with the first embodiment described, the bar 42 is slidably retained within the channel of the guide fence, and at its end remote from the hook 44, it is formed with a pair of indentations 46 in its opposite side walls respectively to receive drive pegs of an operating lever 47 as will be described, the lever 47 being shown in an inverted state in Figure 4. The clamping member 43 is formed with a ribbed wall surface 48 from which is spaced a block 49 by a distance substantially corresponding to the width of the channel 38. In the lower surface of this block is a transverse slot 50, which with the clamping member 43 in its normal, non-inverted, position of use is directed downwardly. The operating lever 47, which like the guide fence 31, bar 42, and clamping member 43, is a plastics moulding, is formed with a main grip part 51 from which extends a wall 52. From this wall 52 extend a pair of spaced parallel arms 53, 54 respectively which at their upper and lower ends remote from the wall 52 are each provided with cam surfaces 55, 56 respectively. Adjacent the cam surface 55, each arm is provided with a short inwardly directed cylindrical peg 57, whilst positioned behind the pegs 57 in the direction of the wall 52 and nearer the cam surfaces 56 is a cylindrical pivot bar 58 extending integrally transversely across the lever 47 from one arm to the other.

On assembly, with the components 42, 43 and 47 inverted from the respective positions shown in Figure 4, the bar 42 is slidingly arranged in the guide fence 31, with its end remote from the hook 44 passing through the opening 41 and into the recess 33 adjacent the upper surface thereof as shown in Figures 5 to 7. The operating lever is disposed at the recess 33 as shown in Figures 5 to 7, with its arms 53, 54 respectively passing through the slots 40 so as to be received adjacent respective opposite sides of the recess adjacent said respective wings 35, 36. With the arms so received in the recess, and with the lever arranged in its Figure 5 position with the wall 52 vertical, the pegs 57 associated with the arms 53, 54 are received in the indentations 46 at the end of the bar 42 so as to connect the operating lever 47 to said bar. As shown in Figure 5, with the lever 47 in its unlocked position, the indentations are just within the recess, at a position adjacent the wall 34, and in this state the hook 44 of the bar 42 is spaced clear of the lip 45 of the base 45a. The lips 37 of the wings extend to downwardly depending flanges which extend to respective opposite sides of the channel part of the guide fence 31. The part of the clamping member 43 which defines the ribbed wall surface 48 is received slidingly between said flanges, and in the position shown in Figure 5 the ribbed wall 48 is disposed slightly rearwardly of the inner face of each lip 37, with the block 49 extending through the opening 41 and into the recess, the clamping member 43 thus being positioned below the end of the bar 42 which is received in the recess. In the position shown in Figure 5, the pivot bar 58 is received in the slot 50 in the block 49 so as to connect the operating lever 47 to said clamping member 43. In the position shown in Figure 5, it can be seen that the outer end surface of each of the arms 53, 54 is lightly against respective surfaces at the opposite sides of the opening 41, with there being clearance between an upstanding lip 59 on the base and the ribbed surface 48 of the clamping member 43, the lip 59 corresponding to the grip bar 15 in the first embodiment. Accordingly with the operating lever 47 in its unlocked state, as shown in Figure 5, it is possible slidingly to adjust the guide fence 31 over the base of the cutting device as the lip 59 has clearance in the channel 38 defined between the surface of the wall 34 on the one hand and the opposite facing surfaces of the lips 37 together with the ribbed wall surface 48 on the other hand. In this position, as mentioned, the hook 44 is also clear of the lip 45.

If the operating lever 47 is now moved to its partially locked position, by pivoting it downwardly to the position shown in Figure 6, it can be seen that the cam surfaces 56 effect camming of the lever 47 by engaging at point X the surfaces at the opposite sides of the opening 41, this camming, by way of the pivot bar 58, causing a slight sliding movement of the clamping member 43 to bring its ribbed wall surface 48 to take up the clearance and tightly clamp onto one side surface of the lip 59, with the opposite side surface of the lip 59 being held tightly against the wall 34 as shown in Figure 6, thereby to clamp this one end of the guide fence to the base of the cutting apparatus. It can be seen that in this position the other cam surfaces 55 engage the underside of the top surface of the recess 33. The pivoting of the operating lever also causes the connected bar 42 to slide within the guide fence 31, so that the hook 44 is brought adjacent the lip 45, though still out of engagement therewith.

Finally if the lever 47 is moved from its Figure 6 to its Figure 7 position by further pivoting, it can be seen that the continued pivoting, by way of the connection to the bar 42 by way of the pegs 57 in the indentations 46, draws the bar to a position where its hook 44 is tightly locked onto the lip 45. The slot formed by the hook is preferably ribbed so that it grips tightly over the lip 45 which may also similarly be ribbed. Moreover in this position the flat surface of each arm between the cam surface 56 and the wall 52 forms a cam bearing surface tight against the inner surface of the wall 34, and the lever can be held in its locked position, as shown in Figure 7, by a ridge 60 at the bottom of the lip 59 engaging in an arcuate groove 61 in an inner face of the wall 52. Release of the lever 47 to allow adjustment of the guide fence is of course the reverse process with, as on locking, the unlocking taking place in one complete movement rather than the separate movements shown for clarity in Figures 5 to 7.

With this second embodiment, it would of course be possible to employ the adjustable protractor invention shown in Figure 3. As with the Figure 1 embodiment, the engaging/clamping surfaces of the guide fence and the base can be formed either with continuous ribbing or with a plurality of ribs on one surface and at least one complementary engagement rib on the other.

## Claims

1. Cutting apparatus comprising a base (10), cutting means (28) for cutting an article of plate-like form received on said base (10), and guide means (11; 31) movable over the base (10) to alter the position of the article relative to said cutting means, the guide means (11;31) having respective portions at its opposite ends engagable with and releasable from respective opposite sides of the apparatus, one of said portions comprising two components relatively movable together and apart to clamp onto or release from part of one side of the apparatus said cutting apparatus being **characterised in that** the one side of the apparatus is linked to the other of said portion by means of a mechanical connection that pulls and pusher the other of said portions into and out of engagement respectively with the other side of the apparatus.

2. Apparatus as claimed in Claim 1, wherein said one end portion of the guide means (11; 31) includes a locking lever (19; 47) pivotable to a first locking position (B) and then to a further locking position (C).

3. Apparatus as claimed in Claim 2, wherein said one side of the apparatus defines a grip bar, (15; 59) and said two components are a slidable member (22; 43) connected to said locking lever (19; 47) and at least one wing (20, 21; 35, 36) extending from the guide means (11; 31), the slidable member and said wing (20, 21; 35, 36) having respective surfaces (48, 34) to clamp, in use, onto opposite surfaces of the grip bar (15; 59) to secure one end of the guide means (11; 31) in a fixed position relative to the base (10) when the locking lever (19; 47) is in a first locking position (B).

4. Apparatus as claimed in Claim 3 wherein said surface of the grip bar (15; 59) and the surface (48) of the slidable member (22; 43) which clamps against it, in use, are formed with a plurality of ribs and at least one complementary engagement rib respectively or vice versa.

5. Apparatus as claimed in Claim 3 or Claim 4, wherein said surface of the grip bar (15; 59) and the surface (34) of the wing (20, 21; 35, 36) which clamps against it, in use, are formed with a plurality of ribs and at least one complementary engagement rib or vice versa.

6. Apparatus as claimed in any one of Claims 3 to 5, wherein the slidable member (22; 43) is connected to the locking lever (19; 47) at a pivot pin.

7. Apparatus as claimed in Claim 6, wherein the locking lever (19; 47) has cam means (56) which, when the locking lever (19; 47) is moved from its unlocked (A) to its first locking position (B), cause the slidable member (22; 43) to slide to take up clearance between itself and the grip bar (15; 59), thereby to clamp onto the grip bar (15; 59).

8. Apparatus as claimed in Claim 2, wherein the other of said portions of the guide means (11; 31) is a clamp (18; 44) and said other side of the apparatus defines a lin (12; 45) respective surfaces of the clamp (18; 44) and the lip (12; 45) engaging when the locking lever (19; 47) is moved to its further locking position (C).

9. Apparatus as claimed in Claim 8, wherein the clamp (18; 44) is at one end of a slidable bar (17; 42) which extends across said base (10) in a guide fence of the guide means (11; 31), the other end of the bar (17; 42) having and the locking lever (19; 47) having interengaging projection (57) and slot means (46) respectively, or vice versa, movement of the locking lever (19; 47) to its further locking position (C) effecting sliding of said bar (17; 42) to engage said clamp (18; 44) with said lip, (12; 45) thereby to secure said other end of the guide means (11; 31) in a fixed position relative to said base (10).

10. An apparatus as claimed is any preceding claims wherein the guide means (11) has relatively adjustably associated therewith article location means (24) for adjusting, in use, the positional/angular relationship between the cutting means (28) and the article to be cut thereby.

11. Apparatus as claimed in Claim 10, wherein the article location means (24) defines a recess (29) at which, in use, the article is located.

12. Apparatus as claimed in Claim 11, wherein the recess (29) is right-angled, with adjoining sides of the recess being lips downturned from the plane of the remainder of the article location means (24).

13. Apparatus as claimed in any one of Claims 10 to 12, wherein the article location means (24) is pivotally mounted at the guide means (11).

14. Apparatus as claimed in any one of Claims 10 to 13, wherein the article location means (24) is carried by a member (23) which is slidable along the guide means (11) so as, in use, to move the article to be cut towards and away from said cutting means (28).

15. Apparatus as claimed in any one of Claims 10 to 14, wherein the guide means (11) is slidably movable over the base (10) in a direction perpendicular to a cutting wheel defining said cutting means (28).

16. Apparatus as claimed in Claim 13, wherein the article location means (24) has an arcuate slot (25) therein through which a clamping element (26) extends, so that when the article location means (24) is adjustably pivoted, in use, it can be clamped in its adjusted position by said clamping element (26).

17. Apparatus as claimed in Claim 16, wherein the degree of angular pivotal adjustment of the article location means (24) can be determined by the position of an indicator of the article location means (24) relative to a scale (27) provided at the guide means (11).

18. Apparatus as claimed in any preceding claim wherein said guide means (11; 31), said slidable bar (17; 42), said slidable member (22; 43) and said locking lever (19; 47) are plastics mouldings.

## Patentansprüche

1. Schneidvorrichtung mit einem Basisteil (10), einem Schneidmittel (28) zum Schneiden eines plattenförmigen Gegenstandes auf dem Basisteil (10) und mit relativ zum Basisteil beweglichen Führungen (11; 31) zum Verändern der Stellung des Gegenstandes in Relation zu dem Schneidmittel, wobei die Führungen (11; 31) an beiden Enden entsprechende Bereiche aufweisen, die mit entsprechenden Bereichen der Schneidvorrichtung in Kontakt kommen und davon lösbar sind, wobei ein Bereich zwei Elemente aufweist, die zueinander und auseinander relativbeweglich sind, um an einer Seite der Schneidvorrichtung eine Klemmwirkung bzw. eine Freigabewirkung zu erreichen, **dadurch gekennzeichnet, dass** die eine Seite der Schneidvorrichtung mit dem anderen dieser Bereiche über eine mechanische Verbindung in Verbindung steht, die den anderen dieser Bereiche in Kontakt bzw. außer Kontakt zu der anderen Seite der Schneidvorrichtung zieht und drückt.

2. Schneidvorrichtung nach Anspruch 1, **dadurch gekennzeichnet, dass** der eine Endbereich der Führungen (11; 31) einen Feststellhebel (19; 47) aufweist, der in eine erste Verriegelungsstellung (B) und weiter in eine zweite Verriegelungsstellung (C) verschwenkbar ist.

3. Schneidvorrichtung nach Anspruch 2, **dadurch gekennzeichnet, dass** die eine Seite der Schneidvorrichtung eine Ansatzleiste (15; 59) aufweist, dass die zwei Elemente als ein mit dem Feststellhebel (19; 47) verbundenes Gleitelement (22; 43) und mindestens ein von den Führungen (11; 31) abstehender Flügel (20, 21; 35, 36) ausgebildet sind, und dass das Gleitelement und der Flügel (20, 21; 35, 36) entsprechende Flächen (48, 34) zum Festklemmen an Flächen der Ansatzleiste (15; 59) aufweisen, um ein Ende der Führungen (11; 31) in fester Relativlage zu dem Basisteil (10) zu sichern, wenn sich der Feststellhebel (19; 47) in einer ersten Verriegelungsstellung (B) befindet.

4. Schneidvorrichtung nach Anspruch 3, **dadurch gekennzeichnet, dass** die Fläche der Ansatzleiste (15; 59) und die Fläche (48) des zugehörigen Gleitelements (22; 43) mit mehreren Rippen bzw. mindestens einer korrespondierenden Kontaktrippe oder umgekehrt versehen sind.

5. Schneidvorrichtung nach Anspruch 3 oder 4, **dadurch gekennzeichnet, dass** die Fläche der Ansatzleiste (15; 59) und die Fläche (34) des zugehörigen Flügels (20, 21; 35, 36) mit mehreren Rippen bzw. mindestens einer korrespondierenden Kontaktrippe oder umgekehrt versehen sind.

6. Schneidvorrichtung nach einem der Ansprüche 3 bis 5, **dadurch gekennzeichnet, dass** das Gleitelement (22; 43) mit dem Feststellhebel (19; 47) über einen Schwenkbolzen verbunden ist.

7. Schneidvorrichtung nach Anspruch 6, **dadurch gekennzeichnet, dass** der Feststellhebel (19; 47) einen Nocken (56) zu seinem Verschwenken aus seiner Freigabestellung (A) in eine erste Verriegelungsstellung (B) aufweist, der das Gleitelement (22; 43) zu einer Gleitbewegung unter Aufbrauch des Spiels zwischen ihm und der Ansatzleiste (15; 59) veranlasst und so die Klemmung an der Ansatzleiste (15; 59) erreicht.

8. Schneidvorrichtung nach Anspruch 2, **dadurch gekennzeichnet, dass** der andere Bereich der Führungen (11; 31) als Klammer (18; 44) ausgebildet ist, und dass die andere Seite der Schneidvorrichtung eine Lippe (12; 45) bildet, wobei die Flächen der Klammer (18; 44) und der Lippe (12; 45) aneinander zur Anlage kommen, wenn der Feststellhebel (19; 47) in seine weitere Verriegelungsstellung (C) bewegt wird.

9. Schneidvorrichtung nach Anspruch 8, **dadurch gekennzeichnet, dass** die Klammer (18; 44) am einen Ende der sich über das Basisteil (10) erstreckenden Leiste (17; 42) in einem Führungslineal der Führungen (11; 31) angeordnet ist, während das andere Ende der Leiste (17; 42) und der Feststellhebel (19; 47) miteinander in Wirkverbindung tretende Vorsprünge (57) bzw. Schlitze (46) oder umgekehrt aufweisen, wobei eine Bewegung des Feststellhebels (19; 47) in seine weitere Verriegelungsposition (C) zu einem Verschieben der Leiste (17; 42) führt, sodass die Klammer (18; 44) an der Lippe (12; 45) zur Anlage kommt und so das andere Ende der Führungen (11; 31) in einer fixen Stellung an dem Basisteil (10) sichert.

10. Eine Schneidvorrichtung nach einem der vorangehenden Ansprüche, **dadurch gekennzeichnet, dass** die Führungen (11) relativ dazu einstellbare zugeordnete Positioniermittel (24) für Gegenstände zum Einstellen der Position und der Winkellage zwischen dem Schneidmittel (28) und dem damit zu schneidenden Gegenstand aufweisen.

11. Schneidvorrichtung nach Anspruch 10, **dadurch gekennzeichnet, dass** die Positioniermittel (24) für die Gegenstände eine Ausnehmung (29) für die Positionierung des Gegenstandes aufweisen.

12. Schneidvorrichtung nach Anspruch 11, **dadurch gekennzeichnet, dass** die Ausnehmung (29) die Gestalt eines rechten Winkels aufweist, wobei die miteinander verbundenen Seiten der Ausnehmung als aus der Ebene des übrigen Teils des Positioniermittels (24) nach unten abgebogene Lippen ausgebildet sind.

13. Schneidvorrichtung nach einem der vorangehenden Ansprüche 10 bis 12, **dadurch gekennzeichnet, dass** die Positioniermittel (24) auf den Führungen (11) schwenkbar gelagert sind.

14. Schneidvorrichtung nach einem der vorangehenden Ansprüche 10 bis 13, **dadurch gekennzeichnet, dass** die Positioniermittel (24) von einem Element (23) getragen sind, das gleitend auf den Führungen (11) angeordnet ist, um den zu schneidenden Gegenstand auf das Schneidmittel (28) und von diesem weg zu bewegen.

15. Schneidvorrichtung nach einem der vorangehenden Ansprüche 10 bis 14, **dadurch gekennzeichnet, dass** die Führungen (11) über das Basisteil (10) in einer Richtung senkrecht zu einem das Schneidmittel (28) bildenden Schneidrad gleitend bewegbar sind.

16. Schneidvorrichtung nach Anspruch 13, **dadurch gekennzeichnet, dass** die Positioniermittel (24) für Gegenstände einen kreisbogenförmigen Schlitz (25) aufweisen, durch den sich ein Klemmelement (26) erstreckt, sodass die Positioniermittel (24) schwenkbar eingestellt und mit dem Klemmelement (26) fixiert werden können.

17. Schneidvorrichtung nach Anspruch 16, **dadurch gekennzeichnet, dass** das Ausmaß der Winkelverstellung des Positioniermittels (24) für die Gegenstände durch die Stellung eines Indikators des Positioniermittels (24) relativ zu einer Skala (27) an der Führung (11) festgelegt ist.

18. Schneidvorrichtung nach einem der vorangehenden Ansprüche, **dadurch gekennzeichnet, dass** die Führungen (11; 31), die Leiste (17; 42), das Gleitelement (22; 43) und der Feststellhebel (19; 47) als Formteile aus Kunststoff ausgebildet sind.

## Revendications

1. Appareil de coupe comprenant une base (10), des moyens de coupe (28) pour couper un article de forme semblable à une plaque logé sur ladite base (10) et des moyens de guidage (11 ; 31) mobiles par-dessus la base (10) pour modifier la position de l'article par rapport auxdits moyens de coupe, les moyens de guidage (11 ; 31) comprenant des portions respectives sur leurs extrémités opposées pouvant s'engager avec et détachables des côtés opposés respectifs de l'appareil, l'une desdites portions comprenant deux éléments relativement mobiles ensemble et à part pour se serrer à bloc sur, ou se détacher d'une partie d'un côté de l'appareil, ledit appareil de coupe étant **caractérisé en ce qu'**un côté de l'appareil est couplé à l'autre desdites portions au moyen d'un raccordement mécanique qui tire et pousse l'autre desdites portions en et hors engagement respectivement avec l'autre côté de l'appareil.

2. Appareil selon la revendication 1, dans lequel ladite une portion d'extrémité des moyens de guidage (11 ; 31) comprend un levier de blocage (19 ; 47) pouvant pivoter vers une première position de blocage (B) et ensuite vers une autre position de blocage (C).

3. Appareil selon la revendication 2, dans lequel ledit un côté de l'appareil définit une barre de préhension (15, 59), et lesdits deux composants sont un élément coulissant (22 ; 43) relié audit levier de blocage (19 ; 47) et au moins une aile (26, 21 ; 35, 36) s'étendant des moyens de guidage (11 ; 31), l'élément coulissant et ladite aile (20, 21 ; 35, 36) ayant des surfaces respectives (48, 34) pour se serrer à bloc, lors de l'utilisation, sur des surfaces opposées de la barre de préhension (15 ; 59) pour fixer une extrémité des moyens de guidage (11 ; 31) dans une position fixe par rapport à la base (10) lorsque le levier de blocage (19 ; 47) est dans une première position de blocage (B).

4. Appareil selon la revendication 3, dans lequel ladite surface de la barre de préhension (15 ; 59) et la surface (48) de l'élément coulissant (22 ; 43) qui se serre à bloc contre elle, lors de l'utilisation, sont formés avec une pluralité de nervures et au moins une nervure d'engagement complémentaire respectivement ou vice versa.

5. Appareil selon la revendication 3 ou la revendication 4, dans lequel ladite surface de la barre de préhension (15 ; 59) et la surface (34) de l'aile (20, 21 ; 35, 36) qui se serre à bloc contre elle, lors de l'utilisation, sont formées avec une pluralité de nervures et au moins une nervure d'engagement complémentaire ou vice versa.

6. Appareil selon l'une quelconque des revendications 3 à 5, dans lequel l'élément coulissant (22 ; 43) est relié au levier de blocage (19 ; 47) sur un pivot.

7. Appareil selon la revendication 6, dans lequel le levier de blocage (19 ; 47) a des moyens formant came (56) qui, lorsque le levier de blocage (19 ; 47) est déplacé de sa position débloquée (A) à sa première position de blocage (B), entraîne l'élément coulissant (22 ; 43) à glisser pour rattraper le dégagement existant entre lui-même et la barre de préhension (15 ; 59) pour se serrer à bloc par ce moyen sur la barre de préhension (15 ; 59).

8. Appareil selon la revendication 2, dans lequel l'autre desdites portions des moyens de guidage (11 ; 31) est une bride de fixation (18 ; 44) et ledit autre côté de l'appareil définit une lèvre (12 ; 45), les surfaces respectives de la bride de fixation (18 ; 44) et la lèvre (12 ; 45) s'engageant lorsque le levier de blocage (19 ; 47) est déplacé vers son autre position de blocage (C).

9. Appareil selon la revendication 8, dans lequel la bride de fixation (18 ; 44) est à une extrémité d'une barre coulissante (17 ; 42) qui s'étend à travers ladite base (10) dans un guide des moyens de guidage (11 ; 31), l'autre extrémité de la barre (17 ; 42) ayant et le levier de blocage (19 ; 47) ayant une partie faisant saillie (51) et des moyens formant fente (46) s'interengageant respectivement, ou vice versa, le mouvement du levier de blocage (19 ; 47) vers son autre position de blocage (c) effectuant le glissement de ladite barre (17 ; 42) pour engager ladite bride de fixation (18 ; 44) avec ladite lèvre (12 ; 45) pour fixer de cette façon ladite autre extrémité des moyens de guidage (11 ; 31) dans une position fixe par rapport à ladite base (10).

10. Appareil selon l'une quelconque des revendications précédentes, dans lequel les moyens de guidage (11) ont des moyens de positionnement d'article (24) relativement associés de façon ajustée avec pour ajuster, lors de l'utilisation, le rapport de position / angulaire entre les moyens de coupe (28) et l'article à couper de cette façon.

11. Appareil selon la revendication 10, dans lequel les moyens de positionnement d'article (24) définissent un évidement (29) sur lequel, lors de l'utilisation, est situé l'article.

12. Appareil selon la revendication 11, dans lequel l'évidement (29) est à angles droits, avec des côtés contigus de l'évidemen qui sont des lèvres rabattues à partir du plan du reste des moyens de positionnement d'article (24).

13. Appareil selon l'une quelconque des revendications 10 à 12, dans lequel les moyens de positionnement d'article (24) sont montés de façon pivotante sur des moyens de guidage (11).

14. Appareil selon l'une quelconque des revendications 10 à 13, dans lequel les moyens de positionnement d'article (24) sont supportés par un élément (23) pouvant coulisser le long des moyens de guidage (11) de manière, lors de l'utilisation, à déplacer l'article à couper vers et à distance desdits moyens de coupe (28).

15. Appareil selon l'une quelconque des revendications 10 à 14, dans lequel les moyens de guidage (11) peuvent coulisser sur la base (10) dans un sens perpendiculaire à une roue de coupe définissant lesdits moyens de coupe (28).

16. Appareil selon la revendication 13, dans lequel les moyens de positionnement d'article (24) ont une fente courbe (25) à l'intérieur à travers laquelle s'étend un élément de serrage à bloc (26) de sorte que lorsque les moyens de placement de l'article (24) sont pivotés de façon ajustable, lors de l'utilisation, il peut être serré à bloc dans sa position ajustée par ledit élément de serrage à bloc (26).

17. Appareil selon la revendication 16, dans lequel le degré d'ajustement pivotal angulaire des moyens de positionnement d'article (24) peut être déterminé par la position d'un indicateur des moyens de positionnement d'article (24) par rapport à une échelle (27) prévue sur les moyens de guidage (11).

18. Appareil selon l'une quelconque des revendications précédentes, dans lequel lesdits moyens de guidage (11 ; 31), ladite barre coulissante (17 ; 42), ledit élément coulissant (22 ; 43) et ledit levier de blocage (19 ; 47) sont des moulages en plastique.
